# EUROPÄISCHE PATENTSCHRIFT

(11) **EP 3 281 688 B1**
(45) Veröffentlichungstag und Bekanntmachung des Hinweises auf die Patenterteilung: **27.01.2021**
(21) Anmeldenummer: 17194163.6
(22) Anmeldetag: 07.12.2015
(51) Int. Cl.: B01F 3/04, B01F 5/04, B01D 63/02, C02F 1/44, C02F 1/78

(54) **VERFAHREN ZUM VERSETZEN EINER FLÜSSIGKEIT MIT EINEM GAS**
METHOD FOR TRANSFERRING A FLUID WITH A GAS
PROCÉDÉ DE MÉLANGE D'UN LIQUIDE ET UN GAZ

(30) Priorität: 08.12.2014 DE 102014118130
(43) Veröffentlichungstag der Anmeldung: 14.02.2018
(62) Teilanmeldung aus: 15820446.1
(73) Patentinhaber: Technische Universität Berlin, 10623 Berlin (DE)
(72) Erfinder: Sabelfeld, Marina, 12621 Berlin (DE); Geißen, Sven-Uwe, 14089 Berlin (DE)
(74) Vertreter: Maikowski & Ninnemann Patentanwälte Partnerschaft mbB

(56) Entgegenhaltungen:
- WO-A1-96/07471
- DE-U1- 29 804 927
- DE-U1-202006 013 661
- US-A- 6 132 079

## Beschreibung

Die vorliegende Erfindung betrifft ein Verfahren zum Versetzen einer Flüssigkeit mit einem Gas gemäß dem Oberbegriff des Anspruchs 1.

Aus dem Stand der Technik sind verschiedene Anwendungsgebiete bekannt, bei denen es erforderlich ist, eine Flüssigkeit mit einem Gas zu versetzen. Beispielsweise erfolgt eine Ozonierung (auch als Ozonung bezeichnet) von Trink-, Prozess- und Abwasser zum Zwecke der Oxidation biologisch schwer abbaubarer organischer Stoffe sowie zur Desinfektion. Häufig erfolgt die Versetzung einer Flüssigkeit mit einem Gas durch eine feinblasige Verteilung des Gases in der Flüssigkeit mittels eines Venturi-Injektorsystems, einer Kerzenbegasung, einer Kolonnenbegasung oder einer Begasung durch rotierende Mischer.

Aus dem Stand der Technik sind auch blasenfreie Begasungssysteme bekannt, bei denen Membrankontaktoren eingesetzt werden. Durch derartige Membrankontaktoren wird bei Einhaltung entsprechender Betriebsbedingungen bezüglich einzuhaltender Drücke eine Schaumbildung, die sich bei einem feinblasigen Gaseintrag in die Flüssigkeit häufig ergibt, vermieden. Außerdem bieten Membrankontaktoren den Vorteil, dass keine Flüssigkeitstropfen und die darin gelösten Stoffen mit Gasblasen mitgerissen werden. Werden Membrankontaktoren als Gas-Flüssigkeits-Kontaktoren eingesetzt, sinkt der für die Begasung erforderliche Energiebedarf, da Membrankontaktoren einen geringeren Druckverlust als andere Gas-Flüssigkeits-Kontaktoren aufweisen, so dass weniger Energie für die Flüssigkeitsförderung erforderlich ist. Darüber hinaus weisen Membrankontaktoren einen wesentlichen geringeren Platzbedarf als andere Gas-Flüssigkeits-Kontaktoren auf. Die in derartigen Membrankontaktoren eingesetzte Membran bei entsprechend blasenfreiem Betrieb dient als Transportbarriere für Flüssigkeitsinhaltsstoffe sowie Flüssigkeitsdampf, so dass die Abgasphase mit weniger Flüssigkeit und Schmutzstoffen beladen ist als im Fall klassischer (dispergierender) Gas-Flüssigkeits-Kontaktoren.

Membrankontaktoren sind in den häufigsten Fällen aus parallel zueinander angeordneten Hohlfasern aufgebaut, wobei die mit dem Gas zu versetzende Flüssigkeit entweder im Inneren der Hohlfasern strömt und das Gas um die Hohlfasern herum oder aber die mit dem Gas zu versetzende Flüssigkeit um die Hohlfasern herumströmt und das Gas durch die Hohlfasern strömt. Wenn das Innere der Hohlfasern von einer mit Gas zu versetzenden Flüssigkeit durchströmt wird, ergibt sich insbesondere bei Flüssigkeiten, die mit Schwebstoffen verunreinigt sind (wie etwa Abwasser), häufig das Problem, dass sich die Hohlfasern zusetzen.

Wenn die Flüssigkeit hingegen auf der Außenseite der Hohlfasern durch einen Membrankontaktor strömt, weisen die aus der Technik bekannten Membrankontaktoren ungünstige Strömungsverläufe für die Flüssigphase auf.

So beschreibt das europäische Patent EP 1 485 193 B1 beispielsweise einen Membrankontaktor, bei dem die mit Gas zu versetzende Flüssigkeit durch einen seitlichen Anschluss in den Membrankontaktor eingeleitet und durch einen anderen seitlichen Anschluss wieder aus den Membrankontaktor herausgeleitet wird. Dadurch ergibt sich einerseits in den Randzonen des Membrankontaktors eine schlechtere Durchströmung, so dass Totzonen ausgebildet werden. Darüber hinaus ist eine aufwendige Innenausgestaltung des Membrankontaktors erforderlich, um den von den Hohlfasern aufgebauten Gegendruck beim Einleiten der Flüssigkeit zu reduzieren. Das vorgenannte europäische Patent sieht hierzu den Einsatz von Abstandshaltern vor, die - zumindest in einem dem Einleitungsstutzen räumlich naheliegenden Bereich - ein verbessertes Einströmen der mit dem Gas zu versetzenden Flüssigkeit in den Membrankontaktor ermöglichen sollen. Derartige Abstandshalter oder andere Einbauten verursachen einen höheren Druckverlust bei der Flüssigkeitsförderung durch das Modul und lösen die Problematik der unzureichend durchströmten Randzonen im Modul nicht.

Aus dem Patent US 6,402,818 B1 ist ein Membrankontaktor zur Entgasung einer Flüssigkeit bekannt. Dabei wird die zu entgasende Flüssigkeit über ein mittig im Membrankontaktor angeordnetes Verteilungsrohr in einen Hohlraum zwischen den einzelnen Hohlfasern des Membrankontaktors eingebracht und senkrecht zu den Hohlfasern aus dem Membrankontaktor abgeführt. Dadurch resultiert eine radiale Strömung der Flüssigphase quer zu den Hohlfasern, welche selbst parallel zum Flüssigkeitsverteilungsrohr angeordnet sind. Damit ergeben sich insgesamt eine verkürzte Verweilzeit der Flüssigkeit im Membrankontaktor und damit eine kürzere Kontaktzeit zwischen der Flüssigphase und der Gasphase. Darüber hinaus ist der Druckverlust bei einer Queranströmung der Hohlfasern im Vergleich zu einer Parallelanströmung wesentlich höher, so dass der Flüssigkeitstransport mit einem erhöhten Energieaufwand einhergeht.

Ein weiteres, im Stand der Technik ungelöstes Problem, ist die Wirtschaftlichkeit eines Verfahrens zur Ozonierung von Wasser und anderen Flüssigkeiten. Denn wenn Ozon bzw. ein ozonhaltiges Gas in eine Flüssigkeit eingeleitet wird, enthält die als Abgas ausströmende Gasphase weiterhin große Mengen noch nicht genutzten Sauerstoffs. Rund zwei Drittel der Energiekosten eines derartigen Verfahrens zur Ozonierung einer Flüssigkeit entfallen jedoch auf die Sauerstoffherstellung. Zwar wird im Patent US 4,132,637 A bereits eine Sauerstoffrückgewinnung vorgeschlagen, doch hat sich gezeigt, dass die Lebensdauer eines Ozongenerators, der gemäß dem in diesem US-Patent beschriebenen Verfahren betrieben wird, verhältnismäßig gering ist.

Die WO 96/07471 A1 offenbart ein Verfahren entsprechend dem Oberbegriff des Anspruchs 1 und beschreibt ein Anschlussstück für eine Vielzahl mikroporöser Hohlfasern, um beispielsweise eine Flüssigkeit mit einem Gas zu beaufschlagen. Dabei ist mindestens ein Paket individueller Fasern vorgesehen, dass zumindest mit einem Ende in einen Materialblock eingeschmolzen ist, wobei die Lumina der einzelnen Fasern an dem Ende des Materialblocks zugänglich bleiben.

Der vorliegenden Erfindung liegt die Aufgabe zugrunde, die aus dem Stand der Technik bekannten Nachteile zu überwinden. Insbesondere soll eine Möglichkeit bereitgestellt werden, die Strömungsverhältnisse in einem Gas-Flüssigkeits-Kontaktor zu verbessern, um die Effizienz des Gas-Flüssigkeits-Kontaktors zu erhöhen. Der vorliegenden Erfindung liegt damit die Aufgabe zugrunde, ein Verfahren zur Effizienzsteigerung bei der Begasung von Flüssigkeiten anzugeben.

Diese Aufgabe wird durch ein Verfahren zum Versetzen einer Flüssigkeit mit einem Gas mit den Merkmalen des Anspruchs 1 gelöst. Ein solches Verfahren wird unter Verwendung eines Gas-Flüssigkeits-Kontaktors gemäß den nachfolgenden Erläuterungen durchgeführt; es zeichnet sich durch die nachfolgend erläuterten Schritte aus. Zunächst wird eine mit einem Gas zu versetzende Flüssigkeit in einen Raum, der Hohlfasern eines Gas-Flüssigkeits-Kontaktors umgibt, eingeleitet. Das heißt, im Rahmen des vorliegend beschriebenen und beanspruchten Verfahrens ist vorgesehen, dass die mit dem Gas zu versetzende Flüssigkeit die Hohlfasern eines Membrankontaktes von außen umströmt. Ferner wird ein Gas in die Hohlfasern des Gas-Flüssigkeits-Kontaktors eingeleitet. Nun werden sowohl das Gas als auch die mit dem Gas zu versetzende Flüssigkeit durch den Gas-Flüssigkeits-Kontaktor strömen gelassen. Dadurch kommt es zum Gasaustausch über die Membran der Hohlfasern hinweg, sodass man schließlich eine mit Gas versetzte Flüssigkeit erhält.

Dabei strömen die mit dem Gas zu versetzende Flüssigkeit und das Gas im Gegenstrom durch den Gas-Flüssigkeits-Kontaktor. Dadurch ergeben sich dann besonders vorteilhafte Gradienten, die einen Übertritt des Gases durch die Hohlfasermembran hindurch in die Flüssigkeit erleichtern.

Der Gas-Flüssigkeits-Kontaktor weist eine Fluidverteileinrichtung auf, die wiederum eine erste Oberfläche bzw. eine erste Seite und eine zweite Oberfläche bzw. eine zweite Seite aufweist. Ferner sind in der Fluidverteileinrichtung zahlreiche Durchbrüche vorgesehen, die sich von der ersten Seite zur zweiten Seite erstrecken und durch die die mit dem Gas zu versetzende Flüssigkeit strömt. Das heißt, diese Durchbrüche sind für die mit dem Gas zu versetzende Flüssigkeit durchlässig. Typischerweise kann es sich bei diesen Durchbrüchen um makroskopisch sichtbare Durchbrüche handeln, durch die die Flüssigkeit als ein erstes Fluid strömen kann.

Die Fluidverteileinrichtung weist außerdem einen Innenraum auf, der einerseits von der ersten Seite und von der zweiten Seite begrenzt wird und andererseits gegenüber den Durchbrüchen fluiddicht ausgestaltet ist. Die Fluidverteileinrichtung weist also eine hohlraumartige Ausgestaltung auf, wobei der Hohlraum mit Durchbrüchen versetzt ist, die jedoch nicht in Strömungsverbindung mit dem Hohlraum stehen. Die mit dem Gas zu versetzende Flüssigkeit, die durch die Durchbrüche strömt, kann folglich nicht durch die Durchbrüche in den Innenraum der Fluidverteileinrichtung eindringen.

Ferner weist die Fluidverteileinrichtung zahlreiche Öffnungen auf, die den Innenraum mit der zweiten Seite verbinden. Das heißt, der Innenraum der Fluidverteileinrichtung ist nicht hermetisch abgedichtet, sondern steht mit einem Außenbereich der Fluidverteileinrichtung über die zweite Seite in Strömungsverbindung.

Schließlich weist die Fluidverteileinrichtung einen Fluidanschluss auf, durch den das Gas als ein zweites Fluid in den Innenraum eingebracht oder aus dem Innenraum ausgebracht wird. Wird dieses Gas durch den Fluidanschluss in den Innenraum der Fluidverteileinrichtung eingebracht, kann es anschließend durch die Öffnungen aus dem Innenraum der Fluidverteileinrichtung ausströmen. Die Fluidverteileinrichtung sorgt dabei dafür, dass das die mit dem Gas zu versetzende Flüssigkeit und das Gas nicht miteinander vermischt werden. Vielmehr tritt im bestimmungsgemäßen Betrieb der Fluidverteileinrichtung die mit dem Gas zu versetzende Flüssigkeit auf der zweiten Seite der Fluidverteileinrichtung aus den Durchbrüchen aus, während das Gas an der zweiten Seite der Fluidverteileinrichtung aus dem Innenraum der Fluidverteileinrichtung austritt. Nachfolgend kommt es zu einem Kontakt zwischen der mit dem Gas zu versetzenden Flüssigkeit und dem Gas.

Die Fluidverteileinrichtung ist derart im Gas-Flüssigkeits-Kontaktor angeordnet, dass die Durchbrüche der Fluidverteileinrichtung nur mit dem die Hohlfasern umgebenen Raum in Strömungsverbindung stehen und dass die Öffnungen der Fluidverteileinrichtungen nur mit einem Innenbereich der Hohlfasern in Strömungsverbindung stehen. Zu diesem Zweck können die Hohlfasern fest mit der Fluidverteileinrichtung verbunden werden. Eine derartige feste Verbindung lässt sich beispielsweise durch Verschweißen, Verkleben oder Einpotten erreichen. Im Ergebnis kann dann eine Flüssigkeit, die durch die Durchbrüche der Fluidverteileinrichtung in den Gas-Flüssigkeits-Kontaktor eintritt, nur durch den Raum, der die Hohlfasern umgibt, strömen. Die Flüssigkeit kann jedoch keinesfalls in den Innenbereich der Hohlfasern eintreten. Demgegenüber kann ein Gas, das aus den Öffnungen der Fluidverteileinrichtung in den Gas-Flüssigkeits-Kontaktor eintritt, nur in den Innenbereich der Hohlfasern strömen, nicht jedoch in den die Hohlfasern umgebenen Raum. Auf diese Weise wird also eine klare strömungstechnische Trennung zwischen der mit dem Gas zu versetzenden Flüssigkeit einerseits und dem Gas, das zum Versetzen der Flüssigkeit verwendet wird, andererseits erreicht. Der Raum, der die Hohlfasern umgibt, bestimmt das Innenvolumen des Gas-Flüssigkeits-Kontaktors, das der die Hohlfasern von außen umströmenden Flüssigkeit zur Verfügung steht. Wie zuvor erläutert, ist dieses Innenvolumen vorzugsweise an den Rohrleitungsquerschnitt eines Leitungssystems, in das der Gas-Flüssigkeits-Kontaktor integriert ist, angepasst.

Die eingesetzte Fluidverteileinrichtung zeichnet sich dadurch aus, dass die Durchbrüche einen Durchmesser aufweisen, der größer ist als ein Durchmesser der Öffnungen. Damit eignen sich die Durchbrüche insbesondere für die Durchleitung einer Flüssigkeit, während die Öffnungen insbesondere zur Durchleitung eines Gases geeignet sind. Sowohl die Durchbrüche als auch die Öffnungen der Fluidverteileinrichtung können dabei dieselbe Gestalt aufweisen. Insbesondere ist eine kreisartige Ausgestaltung der Durchbrüche und der Öffnungen vorgesehen. Eine derartige kreisartige, insbesondere kreisförmige, Ausgestaltung lässt sich fertigungstechnisch besonders einfach realisieren und reduziert den Herstellungsaufwand für die Fluidverteileinrichtung erheblich.

Die Fluidverteileinrichtung ist aus einem Material gefertigt, das weder für die mit dem Gas zu versetzende Flüssigkeit noch für das Gas durchlässig ist. Metalle und Kunststoffe sind geeignete Materialien zur Fertigung der Fluidverteileinrichtung, wobei eine gegenüber denjenigen Fluiden, die durch die Fluidverteileinrichtung strömen sollen, inerte Ausgestaltung der Fluidverteileinrichtung bevorzugt wird.

In einer Variante wird das Verfahren derart durchgeführt, dass ein Flüssigkeitsdruck der mit dem Gas zu versetzenden Flüssigkeit größer ist als ein Gasdruck des Gases. Diese Variante wird insbesondere dann angewandt, wenn die Hohlfasern eine Membran mit einem porösen hydrophoben Material aufweisen.

In einer weiteren Variante wird das Verfahren derart durchgeführt, dass der Flüssigkeitsdruck der mit dem Gas zu versetzenden Flüssigkeit kleiner ist als ein Gasdruck des Gases, welches in die Flüssigkeit eingebracht werden soll. Diese Variante bietet sich insbesondere dann an, wenn die Hohlfasern eine Membran mit einem porenlosen, gasdurchlässigen hydrophoben Material aufweisen.

In beiden Fällen diffundiert das Gas aufgrund der Partialdruckdifferenz zwischen dem Gas auf der einen Seite und der mit dem Gas zu versetzenden Flüssigkeit auf der anderen Seite durch die Membran hindurch. Der Gaseintrag in die Flüssigkeit erfolgt dabei - wie bei Membrankontaktoren allgemein üblich - blasenfrei.

Das vorliegend beschriebene Verfahren kann besonders bevorzugt dazu eingesetzt werden, eine Flüssigkeit mit Ozon zu versetzen. Das heißt, vorzugsweise handelt es sich bei der mit Gas zu versetzenden Flüssigkeit um eine zu ozonierende Flüssigkeit. Ferner handelt es sich vorzugsweise bei dem in die Flüssigkeit einzubringenden Gas um ein ozonhaltiges Gas. Eine Ozonierung einer Flüssigkeit bietet sich zur Desinfektion von Wasser oder zur Aufbereitung von industriellen oder aus Haushalten stammenden Abwässern an.

Der hier beschriebene Gas-Flüssigkeits-Kontaktor und das hier beschriebene Verfahren eignen sich insbesondere zur Ozonierung von mechanisch und biologisch vorgereinigten Abwässern mit dem Ziel der Oxidation refraktärer Abwasserinhaltsstoffe und/oder Desinfektion, zur Ozonierung von Grund- und Oberflächenwasser zur Trinkwasseraufbereitung mit dem Ziel der Desinfektion und der Oxidation refraktärer Wasserinhaltsstoffe, zur Ozonierung von Prozesswässern mit dem Ziel der Oxidation organischer Inhaltsstoffe und zur Ozonierung im Rahmen der Erzeugung von Reinstwasser mit sehr hohen Qualitätsanforderungen und hochkonzentrierten, blasenfreien Ozon-Reinstwasserlösungen, die beispielsweise in der Leiterplattenfertigung oder in der pharmazeutischen Industrie gestellt werden. Das zu ozonierende Wasser kann dabei einen Feststoffgehalt von bis zu 100 mg/l aufweisen, ohne dass es zu Verstopfungen oder anderweitigen Betriebsstörungen des eingesetzten Gas-Flüssigkeits-Kontaktors kommt. Der Feststoffgehalt beträgt insbesondere maximal 50 mg/l, insbesondere maximal 45 mg/l, insbesondere maximal 40 mg/l, insbesondere maximal 30 mg/l, insbesondere maximal 25 mg/l und ganz besonders maximal 20 mg/l. Dies gilt in gleicher Weise für mit anderen Gasen zu versetzende Flüssigkeiten.

Wie eingangs erwähnt, weist ein ozonhaltiges Gas, das aus dem Fluidanschluss aus dem Gas-Flüssigkeits-Kontaktor austritt, häufig noch große Mengen nicht genutzten Sauerstoffes auf. Zur Energieeinsparung ist es daher vorteilhaft, diesen Sauerstoff nach einer entsprechenden Aufbereitung erneut einem Ozongenerator zuzuführen, um neues ozonhaltiges Gas zu erstellen. Alternativ kann der nicht umgesetzte Sauerstoff auch den biologischen Abwasserbehandlungsbecken einer Kläranlage zugeführt werden, um die Sauerstoffversorgung der Biomasse zu verbessern. Im letzteren Anwendungsfall sind an das Abgas keine besonderen Anforderungen zu stellen; lediglich der Ozongehalt sollte durch ein Zerstören von Restmengen an Ozon auf ein Mindestmaß reduziert oder auf null gesetzt werden.

Wenn hingegen das sauerstoffhaltige Abgas erneut einem Ozongenerator zugeführt werden soll, ist auf eine entsprechende Abgasaufbereitung entsprechend dem Stand der Technik hinsichtlich der Reduzierung des Gehaltes an Wasserdampf und organischen Kohlenstoff zu achten, sodass die Lebensdauer des Ozongenerators durch eine Wiederverwendung des sauerstoffhaltigen Abgases nicht beeinträchtigt wird.

Die Erfindung beschreibt daher auch ein geeignetes Verfahren zur Abgasaufbereitung eines aus einem Gas-Flüssigkeits-Kontaktor austretenden sauerstoffhaltigen Gases entsprechend dem Stand der Technik mit den nachfolgend erläuterten Schritten, wobei im Unterschied zum Stand der Technik ein Gas-Flüssigkeits-Kontaktor entsprechend den obigen und noch unten folgenden Erläuterungen eingesetzt werden kann und einige Verfahrensparameter gegenüber bekannten Parametern abgewandelt sein können. Dieses Verfahren kann dabei Teil des zuvor erläuterten Verfahrens zum Versetzen einer Flüssigkeit mit einem Gas sein. Dabei bietet sich dieses Verfahren insbesondere dann an, wenn eine Flüssigkeit (wie etwa ein Abwasser) in dem Gas-Flüssigkeits-Kontaktor mit Ozon versetzt wurde.

Im Rahmen des Verfahrens wird zunächst durch eine Zerstörung von Ozon-Restmengen in dem sauerstoffhaltigen Gas eine Zerstörung von Restozon durchgeführt. Dies kann beispielsweise über die Führung des sauerstoffhaltigen Gases über ein elektrisch geheiztes Element oder über einen Aluminiumkatalysator mit Mangan- und/oder Kupferoxiddotierung erfolgen. Gleichzeitig mit der Zerstörung von Ozon-Restmengen oder im Anschluss an die Zerstörung von Ozon-Restmengen erfolgt eine Reduzierung der Konzentration von Kohlenwasserstoffen auf weniger als 20 ppm, insbesondere auf 0 bis 18 ppm, insbesondere 1 bis 17 ppm, insbesondere 2 bis 16 ppm, insbesondere 3 bis 15 ppm, insbesondere 4 bis 14 ppm, insbesondere 5 bis 13 ppm, insbesondere 6 bis 12 ppm, insbesondere 7 bis 11 ppm, insbesondere 8 bis 10 ppm. Dieser Schritt ist nur dann erforderlich, wenn das sauerstoffhaltige Gas eine Kohlenwasserstoffkonzentration von mehr als 20 ppm bzw. von mehr als den Obergrenzen der zuvor genannten bevorzugten Bereiche aufweist. Diese Reduzierung der Kohlenwasserstoffkonzentration kann beispielsweise durch eine Oxidation mittels Sauerstoff zu CO₂ erfolgen. Zu diesem Zwecke kann das sauerstoffhaltige Abgas über einen erhitzten Katalysator geführt werden.

Nach der Zerstörung von Ozon-Restmengen oder nach der Reduzierung der Kohlenwasserstoffkonzentration erfolgt eine Entfeuchtung des sauerstoffhaltigen Gases. Dabei wird die Entfeuchtung vorzugsweise derart durchgeführt, dass der Taupunkt des resultierenden Gases bei weniger als -80 °C, insbesondere weniger als -70 °C, insbesondere weniger als -60 °C und ganz besonders weniger als -50 °C liegt. Auf diese Weise kann der Wassergehalt in dem resultierenden Gas beispielsweise auf 1 bis 10 ppm, insbesondere 2 bis 9 ppm, insbesondere 3 bis 8 ppm, insbesondere 4 bis 7 ppm und ganz besonders 5 bis 6 ppm gesenkt werden.

Nachfolgend wird die Sauerstoffkonzentration in dem derart entfeuchteten Gas auf mindestens 85 Volumenprozent (Vol.-%), insbesondere mindestens 90 Vol.-%, insbesondere mindestens 91 Vol.-%, insbesondere mindestens 92 Vol.-%, insbesondere mindestens 93 Vol.-%, insbesondere mindestens 94 Vol.-% und ganz besonders mindestens 95 Vol.-% erhöht, sofern das nach den vorherigen Schritten resultierende sauerstoffhaltige Gas eine Sauerstoffkonzentration von weniger als 85 Volumenprozent aufweist. Ein geeigneter Bereich umfasst 85 Vol.-% bis 99 Vol.-% oder einen anderen aus den vorgenannten Zahlenangaben gebildeten Bereich. Diese Sauerstoffaufkonzentrierung kann beispielsweise über eine CO₂-Absorbtion an Molekularsieben erfolgen. Insbesondere zum Zweck einer höheren Ozonerzeugungsrate sollte der CO₂-Gehalt im dem Ozongenerator zugeführten Gas 10 Vol.-% nicht übersteigen. In einer Variante erfolgt die Aufkonzentrierung des Sauerstoffs während des Verfahrens vorzugsweise derart, dass der Sauerstoffgehalt (in Vol.-%) 85 bis 89 % und ganz besonders 86 bis 88 % beträgt.

Nun wird das derart entfeuchtete und sauerstoffangereicherte Gas zu einem Ozongenerator überführt, wo das Gas zur Ozonerzeugung eingesetzt wird, sodass wieder ein ozonhaltiges Gas resultiert. Zu diesem Zweck wird das aus dem Aufbereitungsprozess resultierende Gas typischerweise mit weiterem Sauerstoffgas (welches regelmäßig eine Reinheit von mehr als 99 %, d.h. einen Sauerstoffgehalt von mehr als 99 Vol.-% aufweist) vermischt, sodass im Zulauf der Ozonerzeugungseinheit stets eine Sauerstoffkonzentration von mindestens 85 Vol.-% eingehalten wird.

In einer Variante weisen die erste Seite und die zweite Seite der Fluidverteileinrichtung eine gleichartig ausgestaltete Grundfläche auf. Dies ermöglicht eine besonders einfache Herstellung der Fluidverteileinrichtung.

In einer weiteren Variante weisen die erste Seite und die zweite Seite der Fluidverteileinrichtung jeweils eine kreisartige Grundfläche auf. Der Begriff "kreisartig" umfasst dabei sowohl "kreisförmig" als auch "oval". Da die erste Seite von der zweiten Seite beabstandet ist, weist die Fluidverteileinrichtung in dieser Variante eine zylinderförmige Gesamtgestalt auf. Das heißt, zwischen der ersten Seite und der zweiten Seite ist ein umlaufender Zylindermantel ausgebildet. Je nach Abstand der ersten Seite von der zweiten Seite (und damit je nach Höhe des Zylindermantels) ergibt sich ein unterschiedliches Volumen des Innenraums der Fluidverteileinrichtung. Da die Fluidverteileinrichtung jedoch nicht zur Fluidspeicherung, sondern zur Fluidverteilung eingesetzt wird, ist es nicht erforderlich, dass sie ein besonders großes Volumen aufweist. Vielmehr kann sie verhältnismäßig flach ausgestaltet werden, solange der dem durch den Innenraum strömenden Fluid zur Verfügung stehende Raum noch für gute Strömungsverhältnisse sorgen kann.

Eine kreisartige Grundfläche weist den Vorteil auf, dass eine derart ausgestaltete Fluidverteileinrichtung einfach an das Ende eines als Membrankontaktor ausgestalteten Gas-Flüssigkeits-Kontaktors angebracht werden kann, da derartige Membrankontaktoren regelmäßig ebenfalls eine zylinderförmige Gestalt und damit eine kreisartige oder kreisförmige Grundfläche aufweisen. Die Dimensionen der Fluidverteileinrichtung sind dabei vorzugsweise an die Dimensionen des Membrankontaktors, an den die Fluidverteileinrichtung eingesetzt werden soll, angepasst. Das heißt, die Grundfläche der ersten Seite und die der zweiten Seite der Fluidverteileinrichtung entsprechen jeweils im Wesentlichen der Grundfläche des Gas-Flüssigkeits-Kontaktors, an dem die Fluidverteileinrichtung eingesetzt werden soll.

In einer weiteren Variante ist der Fluidanschluss an einem seitlichen Umfang der Fluidverteileinrichtung angeordnet. Wenn die Fluidverteileinrichtung eine zylinderförmige Gestalt aufweist, handelt es sich bei dem seitlichen Umfang um einen Kreismantel des Zylinders. Dadurch kann das Gas seitlich in die Fluidverteileinrichtung eingebracht werden, während die mit dem Gas zu versetzende Flüssigkeit frontal von der ersten Seite in die Durchbrüche der Fluidverteileinrichtung eingebracht werden kann. Der Fluidanschluss kann insbesondere derart angeordnet sein, dass eine Längserstreckungsrichtung des Fluidanschlusses in einem Winkel von rund 90° (also in einem Winkel von 85° bis 95°, insbesondere 88° bis 92°) zur ersten Seite bzw. zur zweiten Seite angeordnet ist. Da sich die grundsätzlichen Strömungsrichtungen der beiden Fluide im Betrieb der Fluidverteileinrichtung unterscheiden (Gegenstrombetrieb), strömt das Gas in dieser Variante genau parallel entgegengesetzt zur ausströmenden, mit dem Gas zu versetzenden Flüssigkeit in die Fluidverteileinrichtung ein und anschließend in etwa senkrecht zur Einströmrichtung der mit dem Gas zu versetzenden Flüssigkeit in die Durchbrüche der Fluidverteileinrichtung aus dem Fluidanschluss der Fluidverteileinrichtung aus.

Wie bereits erläutert, ist die Fluidverteileinrichtung dafür vorgesehen und eingerichtet, an einen Gas-Flüssigkeits-Kontaktor angeschlossen zu werden, um für optimierte Strömungsverhältnisse der durch den Gas-Flüssigkeits-Kontaktor strömenden Fluide zu sorgen. Im Rahmen des vorliegend beanspruchten Verfahrens wird ein Gas-Flüssigkeits-Kontaktor mit einem Gehäuse, in dem eine Vielzahl von Hohlfasern angeordnet ist und in dem ein die Hohlfasern umgebender Raum ausgebildet ist, eingesetzt. Dabei sind die einzelnen Hohlfasern vorzugsweise parallel zueinander ausgerichtet. Die Hohlfasern dienen dazu, dass eine Gasphase und eine Flüssigphase in dem Gas-Flüssigkeits-Kontaktor miteinander in Kontakt gebracht werden können. Zu diesem Zwecke sind die Hohlfasern aus einem wasserabweisenden Werkstoff gefertigt, so dass die Poren der Hohlfasermembran vorzugsweise von Gas und nicht von Wasser gefüllt werden. Entsprechend angelegter Druck auf der Gas- und Wasserseite sorgt ebenfalls dafür, dass weder Flüssigkeit in die Poren eindringt noch Gas in Flüssigkeit in Form von Blasen eintritt. Auf diese Weise lässt sich ein blasenfreier, diffusiver Gaseintrag in eine um die Hohlfasern strömende Flüssigkeit erreichen, wenn die Hohlfasern von einem Gas durchströmt werden.

Der Gas-Flüssigkeits-Kontaktor zeichnet sich dadurch aus, dass er eine Fluidverteileinrichtung entsprechend den vorherigen Erläuterungen aufweist. Dadurch werden die Strömungsverhältnisse der durch den Gas-Flüssigkeits-Kontaktor strömenden Fluide (nämlich der mit einem Gas zu versetzenden Flüssigkeit und dem Gas, mit dem die Flüssigkeit versetzt werden soll) optimiert. Dadurch reduziert sich der Energiebedarf eines derartigen Gas-Flüssigkeits-Kontaktors gegenüber herkömmlichen Gas-Flüssigkeits-Kontaktoren - und auch gegenüber herkömmlichen Membrankontaktoren - erheblich. Denn durch eine Optimierung der Strömungsverhältnisse wird eine Reduzierung des Gegendrucks, den die mit dem Gas zu versetzende Flüssigkeit beim Strömen überwinden muss, um einen definierten Anreicherungsgrad mit dem Gas zu erzielen, erreicht. Folglich ist auch der Energieaufwand, der für den Flüssigkeitstransport erforderlich ist, geringer als bei einem höheren Gegendruck. Darüber hinaus steigt die Effizienz des Gaseintrags in die mit dem Gas zu versetzende Flüssigkeit, da sowohl die gesamte Länge der Hohlfasern als auch sämtliche Hohlfasern gleichmäßig in Kontakt mit der strömenden, mit dem Gas zu versetzenden Flüssigkeit gebracht werden. Das heißt, die für den Gaseintrag in die Flüssigkeit zur Verfügung stehende Membranfläche der Hohlfasern ist größer als bei nichtströmungsoptimierten Membrankontaktoren.

In einer Variante erstreckt sich der Gas-Flüssigkeits-Kontaktor entlang einer Längserstreckungsrichtung von einem ersten Ende zu einem zweiten Ende. Dabei ist die Fluidverteileinrichtung an dem ersten Ende oder an dem zweiten Ende des Gas-Flüssigkeits-Kontaktors angeordnet. Auf diese Weise ist es besonders einfach möglich, die durch den Gas-Flüssigkeits-Kontaktor zu leitenden Fluide bereits am Eintritt in den Gas-Flüssigkeits-Kontaktor in strömungstechnisch optimierter Weise in den Kontaktor einzuleiten.

In einer weiteren Variante weist der Gas-Flüssigkeits-Kontaktor zwei Fluidverteileinrichtungen auf, wobei die eine Fluidverteileinrichtung an dem ersten Ende und die andere Fluidverteileinrichtung an dem zweiten Ende des Gas-Flüssigkeits-Kontaktors angeordnet sind. Damit ist es einerseits möglich, die durch den Gas-Flüssigkeits-Kontaktor zu leitenden Fluide in strömungstechnisch optimierter Weise in den Gas-Flüssigkeits-Kontaktor einzuleiten und sie andererseits auch auf dieselbe Weise aus dem Gas-Flüssigkeits-Kontaktor auszuleiten. Dadurch ergibt sich insgesamt eine strömungstechnisch optimierte Strömung der Fluide durch den Gas-Flüssigkeits-Kontaktor, so dass eine besonders hohe Effizienz des Kontaktors in Bezug auf die für den Betrieb benötigte Energie und die für einen Gaseintrag in die Flüssigkeit erforderliche Membranoberfläche erreicht wird. Zudem ist es ohne weiteres möglich, die Fließrichtung im Membrankontaktor bei Bedarf zu wechseln.

In einer Variante weist der Gas-Flüssigkeits-Kontaktor zwei Flansche auf, die an den äußeren Enden des Gas-Flüssigkeits-Kontaktors angeordnet sind, so dass sich eine sandwichartige Struktur an den Enden des Gas-Flüssigkeits-Kontaktors ergibt. Ganz außen ist dabei ein Flansch angeordnet, anschließend folgen die Fluidverteileinrichtung und nachfolgend das Gehäuse des Gas-Flüssigkeits-Kontaktors mit den Hohlfasern. Dabei sind die beiden Enden des Gas-Flüssigkeits-Kontaktors in gleicher Weise ausgestaltet. Mit anderen Worten ausgedrückt, sind die Flansche jeweils an einer in der Längserstreckungsrichtung des Gas-Flüssigkeits-Kontaktors äußeren Seite der Fluidverteileinrichtung angeordnet. Die Flansche dienen dabei zum Anschluss des Gas-Flüssigkeits-Kontaktors an ein Leitungssystem. Durch derartige Flansche ist es besonders einfach möglich, den mit einer oder mit zwei Fluidverteileinrichtungen ausgestatteten Gas-Flüssigkeits-Kontaktor in ein bestehendes Leitungssystem zu integrieren. Dadurch kann die mit dem Gas zu versetzende Flüssigkeit ohne Umlenkung durch Umlenkplatten, Hohlfasermatten oder eine Queranströmung der Hohlfasern des Gas-Flüssigkeits-Kontaktors durch den Gas-Flüssigkeits-Kontaktor strömen. Auf diese Weise wird ein sonst auftretender Druckverlust vermieden und eine Verstopfungsgefahr des Gas-Flüssigkeits-Kontaktors reduziert. Durch die Parallelströmung der Flüssigkeit zu den Hohlfasern des Gas-Flüssigkeits-Kontaktors wird eine ausreichend lange Kontaktzeit zwischen der Gasphase und der Flüssigphase gewährleistet, so dass es zu einer weitgehenden Abreicherung der Gasphase kommt. Mit anderen Worten ausgedrückt, werden die Bestandteile der Gasphase, die in die Flüssigkeit eingebracht werden sollen, zu einem hohen Anteil tatsächlich in die Flüssigkeit eingebracht.

Mittels der in Longitudinalrichtung des Gas-Flüssigkeits-Kontaktor angeordneten Flansche kann beispielsweise ein Abschnitt eines bestehenden Rohrleitungssystems einfach durch den hier beschriebenen Gas-Flüssigkeits-Kontaktor ausgetauscht werden. Der Abschnitt weist dabei vorzugsweise eine Länge bis zu 3 Meter, insbesondere bis zu 2,5 Meter, insbesondere bis zu 2 Meter, insbesondere bis zu 1,5 Meter, insbesondere bis zu 1 Meter, insbesondere bis zu 0,8 Meter, insbesondere bis zu 0,5 Meter und insbesondere bis zu 0,3 Meter auf. Das heißt, der Gas-Flüssigkeits-Kontaktor weist eine Länge von beispielsweise 0,3 Meter bis 3 Meter, insbesondere 0,5 Meter bis 2,5 Meter, insbesondere 0,8 Meter bis 2 Meter und insbesondere 1 Meter bis 1,5 Meter auf. Es ist also nicht erforderlich, einen zusätzlichen Fließweg für die Begasung der Flüssigkeit vorzusehen; vielmehr kann der bereits existierende Fließweg im Rohrleitungssystem genutzt werden. Dadurch wird auch kein zusätzlicher Platzbedarf für den Gas-Flüssigkeits-Kontaktor benötigt.

Wenn ein Gas in die Flüssigkeit eingeleitet wird, das anschließend in der Flüssigkeit eine chemische Reaktion auslösen soll und hierfür die Verweilzeit im Membrankontaktor nicht ausreicht, ist es vorteilhaft, einen nach dem Gas-Flüssigkeits-Kontaktor folgenden Rohrabschnitt des Rohrleitungssystems aus einem Material zu fertigen, das gegenüber dem eingeleiteten Gas beständig ist. Wenn beispielsweise Ozon aus einem ozonhaltigen Gas in eine Flüssigkeit eingeleitet werden soll, kann es - je nach Art der Flüssigkeit, in die das Ozon eingeleitet wird - dazu kommen, dass noch nicht reagiertes Ozon mit der Flüssigkeit zusammen durch das Rohrleitungssystem strömt. Dann ist es sinnvoll, einen nach dem Gas-Flüssigkeits-Kontaktor folgenden Rohrleitungsabschnitt aus einem ozonresistenten Material zu fertigen, um eine Schädigung des Rohrleitungssystems durch das Ozon zu vermeiden.

Wenn die mit dem Gas zu versetzende Flüssigkeit über eine Fluidverteileinrichtung gemäß den obigen Erläuterungen in den Gas-Flüssigkeits-Kontaktor eintritt, wird sie gleichmäßig über den gesamten Querschnitt des Gas-Flüssigkeits-Kontaktors verteilt und passiert den Kontaktor in Form einer Pfropfenströmung. Eine mangelhafte Strömungsverteilung, wie sie bei den aus dem Stand der Technik bekannten Membrankontaktoren auftritt (Ausbildung von Totzonen und Kurzschlussströmungen) wird auf diese Weise vermieden, sodass das Innenvolumen des Gas-Flüssigkeits-Kontaktors in bestmöglicher Weise ausgenutzt wird.

In einer Variante beträgt das Verhältnis der Länge des Gas-Flüssigkeits-Kontaktors zum Durchmesser des Gas-Flüssigkeits-Kontaktors mehr als 5:1, insbesondere mehr als 8:1, insbesondere mehr als 10:1, insbesondere mehr als 12:1, insbesondere mehr als 15:1 und ganz besonders mehr als 20:1. Dabei ist insbesondere ein Verhältnisbereich von 8:1 bis 20:1, insbesondere 10:1 bis 18:1 und ganz besonders 12:1 bis 15:1 vorgesehen. Auf diese Art und Weise wird eine ausreichend lange Kontaktzeit zwischen der Gasphase und der Flüssigphase gewährleistet. Die Effizienz des Gaseintrags kann darüber hinaus erhöht werden, wenn die Flüssigkeit mit einer hohen Überströmungsgeschwindigkeit durch den Gas-Flüssigkeits-Kontaktor strömt. Dabei wird die Überströmungsgeschwindigkeit vorzugsweise derart ausgewählt, dass sie in der Größenordnung der Strömungsgeschwindigkeiten in den Rohren eines Leitungssystems, in das der Gas-Flüssigkeits-Kontaktor eingebettet ist, liegt. Zu diesem Zweck entspricht der freie Querschnitt im Gas-Flüssigkeits-Kontaktor vorzugsweise in etwa dem Rohrleitungsquerschnitt des Rohrleitungssystems, in dem der Gas-Flüssigkeits-Kontaktor angeordnet ist. Folglich ist der Querschnitt des Gas-Flüssigkeits-Kontaktors dann um einen solchen Betrag größer als der Querschnitt des vorangehenden und/oder des nachfolgen Rohrabschnitts, der dem Anteil der Hohlfasern in dem Gas-Flüssigkeits-Kontaktor entspricht (Anzahl der Hohlfasern multipliziert mit dem Querschnitt der Hohlfasern). Durch die Wahl eines derart ausreichend hohen freien Querschnitts im Gas-Flüssigkeits-Kontaktor wird ein zusätzlicher Druckverlust an der Fluidverteileinrichtung weitgehend vermieden, sodass sich der Gas-Flüssigkeits-Kontaktor in bestmöglicher Weise in eine bereits vorhandene Anlage integrieren lässt. Die Flüssigkeit kann dann durch den Gas-Flüssigkeits-Kontaktor mit einer vergleichbar hohen Geschwindigkeit strömen wie in den Rohrleitungen vor dem Gas-Flüssigkeits-Kontaktor.

In einer Variante ist die Anordnung der Hohlfasern im Gas-Flüssigkeits-Kontaktor derart an die Anordnung der Öffnungen und Durchbrüche der Fluidverteileinrichtung angepasst, dass die Hohlfasern regelmäßig um die Durchlässe der Fluidverteileinrichtungen herum angeordnet sind. Auf diese Weise wird einerseits eine optimierte Strömung der mit dem Gas zu versetzenden Flüssigkeit durch den Gas-Flüssigkeits-Kontaktor erreicht. Andererseits wird darüber hinaus auch ein bestmöglicher Gasübergang in die mit dem Gas zu versetzende Flüssigkeit ermöglicht, da die dem Gasaustausch dienende Oberfläche der Hohlfasern gleichmäßig um die strömende Flüssigkeit herumverteilt ist.

In einer Variante sind die Hohlfasern gleichmäßig über den Querschnitt des gesamten Gas-Flüssigkeits-Kontaktors verteilt. Dies vereinfacht die Herstellung des Gas-Flüssigkeits-Kontaktors.

Die Hohlfasern weisen vorzugsweise einen Innendurchmesser von 0,05 bis 20 mm, insbesondere 0,1 bis 15 mm, insbesondere 0,5 bis 12 mm, insbesondere 1 bis 10 mm und ganz besonders 2 bis 8 mm auf.

Das Gehäuse des Gas-Flüssigkeits-Kontaktors kann beispielsweise Polytetrafluorethylen (PTFE), Polyvinylidenfluorid (PVDF), Polyvinylchlorid (PVC), insbesondere PVC-hart (PVC-U) und/oder Edelstahl aufweisen oder vollständig aus diesen Materialien bzw. Mischungen dieser Materialien bestehen. Bei den vorgenannten Materialien handelt es sich um ozonbeständige Materialien, sodass sich ein derart ausgestalteter Gas-Flüssigkeits-Kontaktor zum Einsatz im Rahmen der Ozonierung einer Flüssigkeit eignet.

In einer Variante weisen die Hohlfasern eine Membran mit einem porösen hydrophoben Material auf. Vorzugsweise bestehen sie vollständig aus einem derartigen porösen hydrophoben Material. Geeignete poröse hydrophobe Materialien weisen einen Porendurchmesser von 0,001 bis 50 µm, insbesondere 0,002 bis 30 µm, insbesondere 0,005 bis 20 µm, insbesondere 0,01 bis 10 µm und ganz besonders 0,05 bis 1 µm auf. Geeignete Materialien sind PTFE, Perfluorethylenpropylen (FEP) und/oder Perfluoralkoxyalkan (PFA) oder eine Mischung dieser Materialien. In einer Variante kann die Membran vollständig aus den vorgenannten Materialien oder Mischungen daraus bestehen. Ein Gaseintrag in die mit Gas zu versetzende Flüssigkeit würde dann durch eine Gasdiffusion durch die Poren der Membran hindurch erfolgen.

Ein Material wird dann als hydrophob angesehen, wenn es einen Kontaktwinkel mit Wasser von mehr als 90°, insbesondere mehr als 95°, insbesondere mehr als 100°, insbesondere mehr als 110° und ganz besonders mehr als 120° aufweist.

In einer alternativen Ausgestaltung weisen die Hohlfasern eine Membran mit einem porenlosen und gasdurchlässigen hydrophoben Material auf. Derartiges Material wird als gasdurchlässig angesehen, wenn es für das betreffende Gas eine Gaspermeabilität von mehr als 100 Barrer, insbesondere mehr als 200 Barrer, insbesondere mehr als 300 Barrer, insbesondere mehr als 400 Barrer und ganz besonders mehr als 500 Barrer aufweist. Beispielsweise ist das von der Firma DuPont unter der Handelbezeichnung Teflon AF angebotene amorphe Fluorpolymer ein geeignetes gasdurchlässiges hydrophobes Material, insbesondere, wenn es sich bei dem einzusetzenden Gas um Ozon handelt. Beispielsweise sind hier die Materialien Teflon AF 1600 und Teflon AF 2400 besonders geeignet.

Bevorzugte und alternative Ausgestaltungen der beschriebenen Fluidverteileinrichtung, des beschriebenen Gas-Flüssigkeits-Kontaktors, des beschriebenen Verfahrens zum Versetzen einer Flüssigkeit mit einem Gas und des beschriebenen Verfahrens zur Abgasaufbereitung sind in beliebiger Weise miteinander kombinierbar und sowohl von den Vorrichtungen auf die Verfahren als auch von den Verfahren auf die Vorrichtungen sowie auf die jeweils anderen Vorrichtungen und die jeweils anderen Verfahren übertragbar.

Weitere Details der vorliegenden Erfindung werden anhand von Ausführungsbeispielen und den nachfolgend beschriebenen Figuren näher erläutert. Es zeigen:
- Fig. 1: eine grafische Darstellung des Ozontransports durch eine poröse Membran und eine porenlose Membran;
- Fig. 2: eine schematische Darstellung eines Ausführungsbeispiels eines Gas-Flüssigkeits-Kontaktors;
- Fig. 3A: eine schematische Ansicht einer Oberseite eines Ausführungsbeispiels einer Fluidverteileinrichtung;
- Fig. 3B: eine schematische Darstellung einer Unterseite des Ausführungsbeispiels der Fluidverteileinrichtung der Figur 3A;
- Fig. 4: eine Schnittansicht durch die Fluidverteileinrichtung der Figuren 3A und 3B und
- Fig. 5: ein schematisches Ablaufdiagramm eines Ausführungsbeispiels eines Verfahrens zur Abgasaufbereitung.

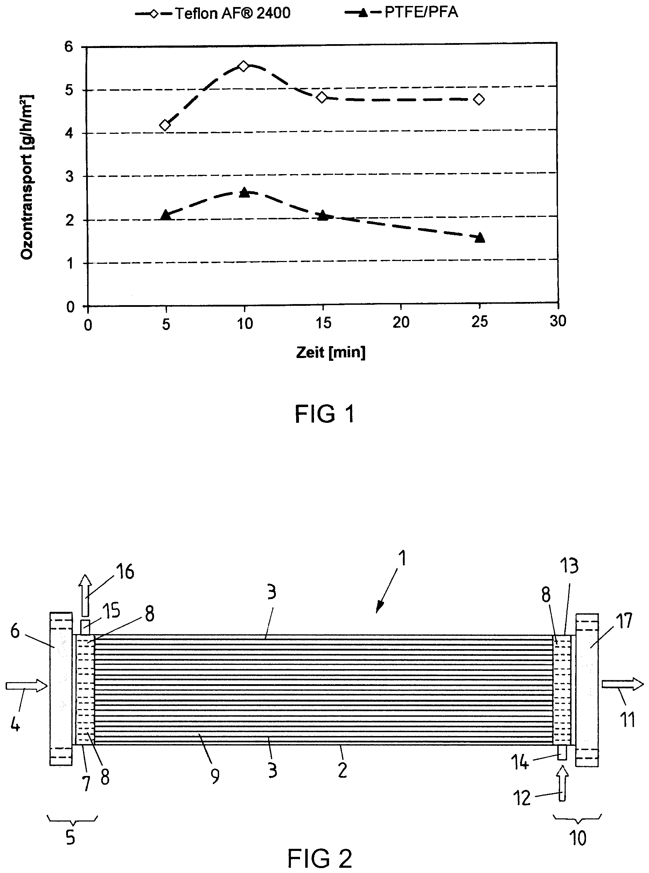

Die Figur 1 zeigt eine grafische Darstellung des über eine bestimmte Reaktionszeit beobachteten Ozontransports über eine Membran in einem Hohlfaser-Membrankontaktor hinweg. Dabei wurde einerseits eine hydrophobe poröse Membran aus PTFE/PFA (ausgefüllte Dreiecke) und andererseits eine hydrophobe porenfreie Membran aus Teflon AF 2400 (nichtausgefüllte Quadrate) untersucht. Wie aus der Darstellung der Figur 1 zu sehen ist, ist der Ozontransport durch die porenlose Membran in fast allen Verfahrensstadien mehr als doppelt so groß wie der Ozontransport durch die poröse Membran hindurch. Dies zeigt, dass Teflon AF 2400 und andere vergleichbare porenfreie Membranen sehr gut als Material zur Herstellung von Hohlfasern für Membrankontaktoren geeignet sind. In Abhängigkeit des durch die Membran zu transportierenden Gases können dabei unterschiedliche Materialien besonders für den Aufbau der Hohlfasern des Membrankontaktors geeignet sein.

Die Figur 2 zeigt eine schematische Schnittansicht durch ein Membrankontaktormodul 1 als Ausführungsbeispiel eines Gas-Flüssigkeits-Kontaktors. Das Membrankontaktormodul 1 weist ein Gehäuse 2 auf, in dessen Innerem eine Vielzahl von Hohlfasern 3 gleichmäßig verteilt und parallel zueinander angeordnet sind.

Eine mit einem Gas zu versetzende Flüssigkeit 4 wird an einer Flüssigkeitseinlassseite 5, die ein erstes Ende des Membrankontaktormoduls 1 darstellt, in das Membrankontaktormodul 1 eingeleitet. Dazu strömt die mit dem Gas zu versetzende Flüssigkeit 4 zunächst durch einen Flansch 6 und anschließend durch eine Gasverteilplatte 7, die als Fluidverteilplatte dient. Zu diesem Zweck sind in der Gasverteilplatte 7 zahlreiche Durchbrüche 8 ausgebildet, von denen nur einige mit dem entsprechenden Bezugszeichen versehen sind. Durch die Durchbrüche 8 hindurch tritt die mit dem Gas zu versetzende Flüssigkeit 4 in einen Hohlraum 9 ein, der zwischen den einzelnen Hohlfasern 3 ausgebildet ist. Das heißt, die Flüssigkeit 4 umströmt die Hohlfasern 3 auf deren Außenseiten.

An einer Flüssigkeitsauslassseite 10, die einem zweiten Ende des Membrankontaktormoduls 1 entspricht, tritt die mit dem Gas versetzte Flüssigkeit 11 dann aus dem Membrankontaktormodul 1 aus. An der Flüssigkeitsauslassseite 10 wird zudem ein Gas 12 in die Hohlfasern 3 des Membrankontaktormoduls 1 eingeleitet und strömt im Gegenstrom zur Flüssigkeit 4 hin zur Flüssigkeitseinlassseite 5. Die Einleitung des Gases 12 erfolgt dabei an einer zweiten Gasverteilplatte 13, die identisch wie die erste Gasverteilplatte 7 aufgebaut ist. So strömt das Gas 12 durch einen Gasanschluss 14 in einen Hohlraum der zweiten Gasverteilplatte 13 ein. Aus diesem Hohlraum strömt es dann durch Öffnungen, die mit den Innenbereichen der Hohlfasern 3 in Strömungsverbindung stehen und gegenüber dem Innenraum 9 des Membrankontaktormoduls 1 gasdicht abgedichtet sind, in die Innenbereiche der Hohlfasern 3 hinein. Anschließend strömt das Gas 12 weiter durch die Hohlfasern 3 hindurch bis zur ersten Gasverteilplatte 7. Dort tritt es dann in einen Hohlraum der ersten Gasverteilplatte 7 ein, den das Gas anschließend durch einen Gasauslass 15 verlässt. Das aus dem Gasauslass 15 austretende Gas kann auch als Abgas 16 bezeichnet werden.

Damit das Membrankontaktormodul 1 gut in ein bestehendes Rohrleitungssystem eingepasst werden kann, weist es nicht nur einen ersten Flansch 6 an der Flüssigkeitseintrittsseite 5 auf, sondern auch einen zweiten Flansch 17 an der Flüssigkeitsaustrittsseite 10. Mittels dieser Flansche 6, 17 lässt sich das Membrankontaktormodul 1 problemlos in ein bestehendes Rohrleitungssystem integrieren.

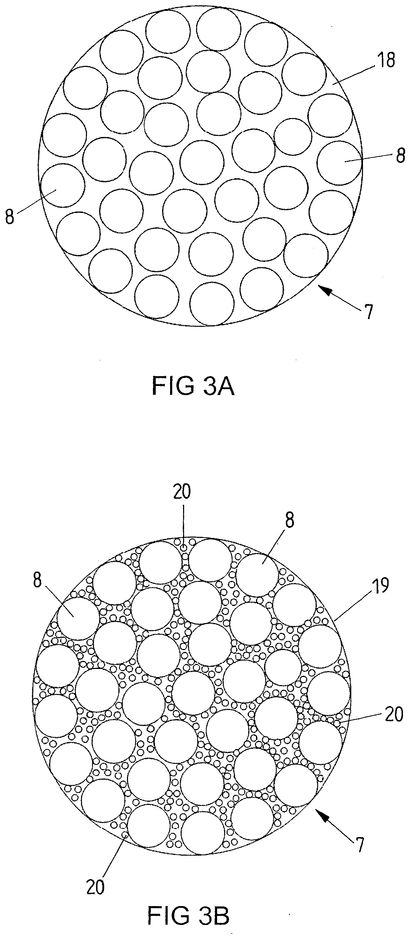

Die im Membrankontaktormodul 1 der Figur 2 eingesetzte erste Gasverteilplatte 7 ist in den Figuren 3A und 3B in Detaildarstellungen gezeigt. So zeigt die Figur 3A eine Oberseite 18 der Gasverteilplatte 7, die im Membrankontaktor 1 der Figur 2 zum ersten Flansch 6 hin orientiert ist. In der Oberseite 18, die als erste Seite der Gasverteilplatte 7 dient, sind zahlreiche Durchbrüche 8 ausgebildet, die jeweils eine kreisförmige Grundfläche aufweisen. Diese Durchbrüche 8 durchgreifen die Gasverteilplatte 7 vollständig.

Die Figur 3B zeigt eine Unterseite 19 der Gasverteilplatte 7. Auch an der Unterseite 19 sind die Durchbrüche 8 zu erkennen, da diese die Gasverteilplatte 7 vollständig durchgreifen. Im Inneren der Gasverteilplatte 7 zwischen der Oberseite 18 und der Unterseite 19 ist ein Hohlraum ausgebildet, der mit kleineren Öffnungen 20 in Strömungsverbindung steht. Diese Öffnungen 20, von denen abermals nur einige wenige mit dem entsprechenden Bezugszeichen versehen sind, dienen dazu, einerseits das Gas in mit den Öffnungen 20 verbundene Hohlfasern einzuleiten, und andererseits, das aus den Hohlfasern ausströmende Gas aufzunehmen und zu einem Gasauslass 15 (vergleiche Figur 2) der Gasverteilplatte 7 zu leiten. Je nach Strömungsrichtung des Gases kommen den Öffnungen 20 also unterschiedliche Aufgaben zu.

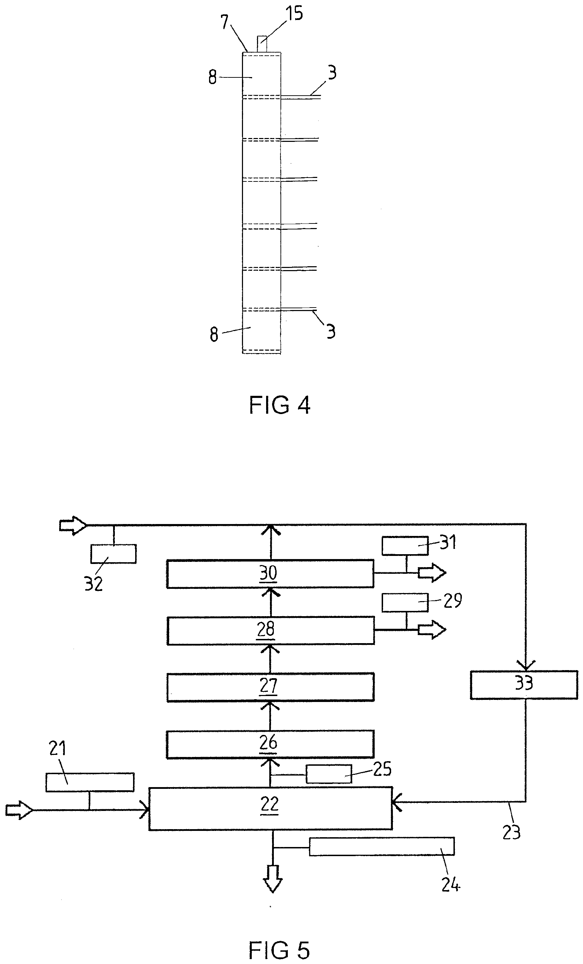

Die Figur 4 zeigt eine schematische Querschnittsdarstellung durch die erste Gasverteilplatte 7 aus dem Ausführungsbeispiel der Figur 2. Dabei ist in dieser vergrößerten Darstellung gut zu erkennen, dass die Hohlfasern 3 nur in solchen Bereichen angeordnet sind, an denen sich Öffnungen der ersten Gasverteilplatte 7 befinden, die den Innenbereich der Hohlfasern 3 mit dem Innenraum der Gasverteilplatte 7 verbinden. Auf diese Weise kann Gas durch die Hohlfasern 3 in den Innenraum der Gasverteilplatte 7 strömen und dann zum Gasauslass 15 geführt werden. Demgegenüber sind die Durchbrüche 8 vom Innenraum der Gasverteilplatte 7 fluiddicht abgedichtet, so dass eine Flüssigkeit durch die Durchbrüche 8 hindurch in das Innere des Membrankontaktors 1 (vergleiche Figur 2) treten kann, ohne in direkten Kontakt mit einem im Innenraum der Gasverteilplatte 7 geführten Gas zu kommen.

Die Figur 5 zeigt ein schematisches Ablaufdiagramm eines Verfahrens zur Aufbereitung von Abgas nach dem Stand der Technik, welches aus einem Gas-Flüssigkeits-Kontaktor austritt und Sauerstoff enthält. Dabei bezieht sich das Beispiel der Figur 5 auf die Wiedergewinnung von sauerstoffhaltigem Abgas aus einem Verfahren, bei dem eine Flüssigkeit ozoniert wird.

Zunächst wird eine zu ozonierende Flüssigkeit 21 in einen Ozongas-Flüssigkeits-Kontaktapparat 22 eingebracht. In diesen Ozongas-Flüssigkeits-Kontaktapparat 22 wird zudem ein ozonhaltiges Gas 23 eingebracht. Nun kann einerseits eine ozonierte Flüssigphase 24 aus dem Ozongas-Flüssigkeits-Kontaktapparat 22 abgezogen werden. Darüber hinaus fällt aber auch Abgas 25 an, das ein sauerstoffhaltiges Gas darstellt, da in dem Ozongas-Flüssigkeits-Kontaktapparat 22 nicht sämtlicher Sauerstoff aus dem ozonhaltigen Gas 23 in die Flüssigphase übergegangen ist. Im Abgas 25 wird nun eine Restozon-Zerstörung 26, also eine Zerstörung von Ozon-Restmengen, durchgeführt. Anschließend erfolgt eine Kohlenwasserstoffeliminierung 27 durch eine Reduzierung der Kohlenwasserstoffkonzentration auf weniger als 20 ppm Kohlenwasserstoffe im Abgas 25. Nun wird eine Trocknung 28 des Abgases durchgeführt, wobei Wasser 29 aus dem Abgas 25 entfernt wird. Anschließend erfolgt eine Sauerstoffaufkonzentrierung 30, wobei CO₂ 31 abgeschieden wird. Die Aufkonzentrierung hat zur Folge, dass die Sauerstoffkonzentration auf 85 Vol.-% erhöht wird. Nun wird das derart gereinigte, getrocknete und sauerstoffangereicherte Abgas einem Gasstrom aus reinem Sauerstoff 32 zugeführt und zu einem Ozongenerator 33 geführt. Dort erfolgt eine Erzeugung von Ozon, so dass wieder ozonhaltiges Gas 23 entsteht, das im Ozongas-Flüssigkeits-Kontaktapparat 22 zur Ozonierung eingesetzt werden kann.

Der Ozongas-Flüssigkeits-Kontaktapparat 22 ist als Membrankontaktor ausgestaltet. Dabei stellt die Membran eine Barriere für Wasserdampf und für organische Substanzen dar, die in partikulärer oder in gelöster Form in der mit dem Ozongas zu versetzenden Flüssigkeit 21 enthalten sind. Damit ergibt sich eine höhere Reinheit des Abgases 25 im Vergleich zu anderen Begasungseinrichtungen. Folglich kann die nachfolgende Abgasaufbereitung auch wirtschaftlicher erfolgen.

Durch die Eliminierung von Kohlenwasserstoffen bilden sich signifikant weniger Ablagerungen auf den Elektroden des Ozongenerators 33, weshalb die Lebensdauer dieses Ozongenerators 33 wesentlich erhöht ist. Dazu trägt auch die CO₂-Abscheidung im Schritt der Sauerstoffaufkonzentrierung 30 bei.

## Patentansprüche

1. Verfahren zum Versetzen einer Flüssigkeit mit einem Gas unter Verwendung eines Gas-Flüssigkeits-Kontaktors (1) mit einem Gehäuse (2), in dem eine Vielzahl von Hohlfasern (3) angeordnet ist und ein die Hohlfasern (3) umgebender Raum (9) ausgebildet ist, wobei das Verfahren die folgenden Schritte aufweist:
a) Einleiten einer mit Gas zu versetzenden Flüssigkeit (4) in den die Hohlfasern (3) des Gas-Flüssigkeits-Kontaktors (1) umgebenden Raum (9),
b) Einleiten eines Gases (12) in die Hohlfasern (3) des Gas-Flüssigkeits-Kontaktors (1),
c) Strömenlassen der mit Gas zu versetzenden Flüssigkeit (4) und des Gases (12) im Gas-Flüssigkeits-Kontaktor (1), und
d) Erhalten einer mit Gas versetzten Flüssigkeit (11),
wobei die mit Gas zu versetzende Flüssigkeit (4) und das Gas (12) durch den Gas-Flüssigkeits-Kontaktor (1) im Gegenstrom strömen und
wobei der Gas-Flüssigkeits-Kontaktor (1) eine Fluidverteileinrichtung (7, 13) mit einer ersten Seite (18) und einer zweiten Seite (19) und einer Vielzahl von Durchbrüchen (8) aufweist, die sich von der ersten Seite (18) zur zweiten Seite (19) erstrecken und durch die die mit Gas zu versetzende Flüssigkeit (4) strömt, wobei die Fluidverteileinrichtung (7, 13) ferner folgendes aufweist: a) einen Innenraum, der von der ersten Seite (18) und von der zweiten Seite (19) begrenzt wird und der gegenüber den Durchbrüchen (8) fluiddicht ausgestaltet ist; b) eine Vielzahl von Öffnungen (20), die den Innenraum mit der zweiten Seite (19) verbinden; und c) einen Fluidanschluss (14, 15), durch den das Gas (12) in den Innenraum eingebracht oder aus dem Innenraum ausgebracht wird,
wobei die Fluidverteileinrichtung (7, 13) derart angeordnet ist, dass die Durchbrüche (8) der Fluidverteileinrichtung (7, 13) mit dem die Hohlfasern (3) umgebenden Raum (9) in Strömungsverbindung stehen und dass die Öffnungen (20) der Fluidverteileinrichtung (7, 13) mit einem Innenbereich der Hohlfasern (3) in Strömungsverbindung stehen,
**dadurch gekennzeichnet,**
**dass** die Durchbrüche (8) der Fluidverteileinrichtung einen Durchmesser aufweisen, der größer ist als ein Durchmesser der Öffnungen (20).

2. Verfahren nach Anspruch 1, **dadurch gekennzeichnet, dass** ein Flüssigkeitsdruck der mit Gas zu versetzenden Flüssigkeit (4) größer ist als ein Gasdruck des Gases (12), sofern die Hohlfasern (3) eine Membran mit einem porösen hydrophoben Material aufweisen.

3. Verfahren nach Anspruch 1, **dadurch gekennzeichnet, dass** ein Flüssigkeitsdruck der mit Gas zu versetzenden Flüssigkeit (4) kleiner ist als ein Gasdruck des Gases (12), sofern die Hohlfasern (3) eine Membran mit einem porenlosen und gasdurchlässigen hydrophoben Material aufweisen.

4. Verfahren nach einem der vorhergehenden Ansprüche, **dadurch gekennzeichnet, dass** die mit Gas zu versetzende Flüssigkeit (4) eine zu ozonierende Flüssigkeit ist und dass das Gas (12) ein ozonhaltiges Gas ist.

5. Verfahren nach Anspruch 4, **dadurch gekennzeichnet, dass** das ozonhaltige Gas, das aus dem Fluidanschluss aus dem Gas-Flüssigkeits-Kontaktor austritt und noch große Mengen nicht genutzten Sauerstoffs aufweist, als sauerstoffhaltiges Gas einer Abgasaufbereitung mit den folgenden Schritten unterzogen wird:
a) Zerstörung von Ozon-Restmengen in dem sauerstoffhaltigen Gas,
b) sofern die Konzentration von Kohlenwasserstoffen in dem sauerstoffhaltigen Gas mehr als 20 ppm beträgt: Reduzierung der Konzentration von Kohlenwasserstoffen in dem sauerstoffhaltigen Gas auf weniger als 20 ppm,
c) Entfeuchtung des sauerstoffhaltigen Gases,
d) Erhöhung der Sauerstoffkonzentration in dem entfeuchteten sauerstoffhaltigen Gas auf mindestens 85 Volumenprozent,
e) Überführen des entfeuchteten und sauerstoffangereicherten Gases zu einem Ozongenerator, wo das Gas zur Ozonerzeugung eingesetzt wird, sodass wieder ein ozonhaltiges Gas resultiert.

6. Verfahren nach einem der vorhergehenden Ansprüche, **dadurch gekennzeichnet, dass** die erste Seite (18) und die zweite Seite (19) der Fluidverteileinrichtung jeweils eine kreisartige Grundfläche aufweisen.

7. Verfahren nach einem der vorhergehenden Ansprüche, **dadurch gekennzeichnet, dass** der Fluidanschluss (14, 15) der Fluidverteileinrichtung an einem seitlichen Umfang der Fluidverteileinrichtung (7, 13) angeordnet ist.

8. Verfahren nach einem der vorhergehenden Ansprüche, **dadurch gekennzeichnet, dass** sich der Gas-Flüssigkeits-Kontaktor (1) entlang einer Längserstreckungsrichtung von einem ersten Ende (5) zu einem zweiten Ende (10) erstreckt und die Fluidverteileinrichtung (7, 13) an dem ersten Ende (5) oder an dem zweiten Ende (10) des Gas-Flüssigkeits-Kontaktors angeordnet ist.

9. Verfahren nach Anspruch 8, **dadurch gekennzeichnet, dass** der Gas-Flüssigkeits-Kontaktor (1) zwei Fluidverteileinrichtungen (7, 13) aufweist, wobei die eine Fluidverteileinrichtung (7) an dem ersten Ende (5) und die andere Fluidverteileinrichtung (13) an dem zweiten Ende (10) angeordnet ist.

10. Verfahren nach Anspruch 9, **dadurch gekennzeichnet, dass** am Gas-Flüssigkeits-Kontaktor (1) zwei Flansche (6, 17) vorgesehen sind, die an jeweils einer in der Längserstreckungsrichtung des Gas-Flüssigkeits-Kontaktors (1) äußeren Seite der Fluidverteileinrichtung (7, 13) angeordnet sind und zum Anschluss des Gas-Flüssigkeits-Kontaktors (1) an ein Leitungssystem dienen.

11. Verfahren nach einem der vorhergehenden Ansprüche, **dadurch gekennzeichnet, dass** die Hohlfasern (3) eine Membran mit einem porösen hydrophoben Material aufweisen.

12. Verfahren nach einem der Ansprüche 1 bis 10, **dadurch gekennzeichnet, dass** die Hohlfasern (3) eine Membran mit einem porenlosen und gasdurchlässigen hydrophoben Material aufweisen.

## Claims

1. A method for mixing a liquid with a gas by using a gas-liquid contactor (1) with a housing (2) in which a plurality of hollow fibers (3) is arranged and a space (9) surrounding the hollow fibers (3) is formed,
the method including the following steps:
a) introducing a liquid (4) to be mixed with gas into the space (9) surrounding the hollow fibers (3) of the gas-liquid contactor (1),
b) introducing a gas (12) into the hollow fibers (3) of the gas-liquid contactor (1),
c) allowing the liquid (4) to be mixed with gas and the gas (12) to flow in the gas-liquid contactor (1), and
d) obtaining a liquid (11) mixed with gas,
wherein the liquid (4) to be mixed with gas and the gas (12) countercurrently flow through the gas-liquid contactor (1), and
wherein the gas-liquid contactor (1) includes a fluid distribution device (7, 13) with a first side (18) and a second side (19) and a plurality of apertures (8) which extend from the first side (18) to the second side (19) and through which the liquid (4) to be mixed with gas flows, the fluid distribution device (7, 13) furthermore including: a) an interior space which is delimited by the first side (18) and by the second side (19) and which is designed fluid-tight with respect to the apertures (8); b) a plurality of openings (20) which connect the interior space with the second side (19); and c) a fluid port (14, 15) through which the gas (12) is introduced into the interior space or discharged from the interior space,
wherein the fluid distribution device (7, 13) is arranged such that the apertures (8) of the fluid distribution device (7, 13) are in flow connection with the space (9) surrounding the hollow fibers (3) and that the openings (20) of the fluid distribution device (7, 13) are in flow connection with an inner region of the hollow fibers (3),
**characterized in**
**that** the apertures (8) of the fluid distribution device have a diameter which is greater than a diameter of the openings (20).

2. The method according to claim 1, **characterized in that** a liquid pressure of the liquid (4) to be mixed with gas is greater than a gas pressure of the gas (12) provided that the hollow fibers (3) have a membrane comprising a porous hydrophobic material.

3. The method according to claim 1, **characterized in that** a liquid pressure of the liquid (4) to be mixed with gas is smaller than a gas pressure of the gas (12) provided that the hollow fibers (3) have a membrane comprising a poreless and gas-permeable hydrophobic material.

4. The method according to any of the preceding claims, **characterized in that** the liquid (4) to be mixed with gas is a liquid to be ozonized, and that the gas (12) is an ozone-containing gas.

5. The method according to claim 4, **characterized in that** the ozone-containing gas which exits from the fluid port of the gas-liquid contactor and still contains large amounts of non-used oxygen is subjected to an exhaust gas treatment as an oxygen-containing gas, comprising the following steps:
a) destruction of residual amounts of ozone in the oxygen-containing gas,
b) provided that the concentration of hydrocarbons in the oxygen-containing gas is more than 20 ppm: reduction of the concentration of hydrocarbons in the oxygen-containing gas to less than 20 ppm,
c) dehumidification of the oxygen-containing gas,
d) increase of the oxygen concentration in the dehumidified oxygen-containing gas to at least 85 percent by volume,
e) transfer of the dehumidified and oxygen-enriched gas to an ozone generator, where the gas is used for generating oxygen, which again results in an ozone-containing gas.

6. The method according to any of the preceding claims, **characterized in that** the first side (18) and the second side (19) of the fluid distribution device each have a circular base area.

7. The method according to any of the preceding claims, **characterized in that** the fluid port (14, 15) of the fluid distribution device is arranged on a lateral circumference of the fluid distribution device (7, 13).

8. The method according to any of the preceding claims, **characterized in that** the gas-liquid contactor (1) extends along a longitudinal direction of extension from a first end (5) to a second end (10) and the fluid distribution device (7, 13) is arranged at a first end (5) or at the second end (10) of the gas-liquid-contactor.

9. The method according to claim 8, **characterized in that** the gas-liquid contactor (1) includes two fluid distribution devices (7, 13), wherein the one fluid distribution device (7) is arranged at the first end (5) and the other fluid distribution device (13) is arranged at the second end (10).

10. The method according to claim 9, **characterized in that** two flanges (6, 17) are provided at the gas-liquid contactor (1), which are each arranged on an outer side of the fluid distribution device (7, 13) in the direction of longitudinal extension of the gas-liquid contactor (1) and serve to connect the gas-liquid contactor (1) to a line system.

11. The method according to any of the preceding claims, **characterized in that** the hollow fibers (3) have a membrane comprising a porous hydrophobic material.

12. The method according to any of claims 1 to 10, **characterized in that** the hollow fibers (3) have a membrane comprising a poreless and gas-permeable hydrophobic material.

## Revendications

1. Procédé pour le mélange d'un liquide avec un gaz en utilisant un dispositif de mise en contact de gaz-liquide (1) muni d'un boîtier (2), dans lequel une pluralité de fibres creuses (3) est agencée et un espace (9) entourant les fibres creuses (3) est formé, le procédé comprenant les étapes suivantes :
a) l'introduction d'un liquide à mélanger avec du gaz (4) dans l'espace (9) entourant les fibres creuses (3) du dispositif de mise en contact de gaz-liquide (1),
b) l'introduction d'un gaz (12) dans les fibres creuses (3) du dispositif de mise en contact de gaz-liquide (1),
c) l'écoulement du liquide à mélanger avec du gaz (4) et du gaz (12) dans le dispositif de mise en contact de gaz-liquide (1), et
d) l'obtention d'un liquide mélangé avec du gaz (11), dans lequel le liquide à mélanger avec du gaz (4) et le gaz (12) s'écoulant à contre-courant au travers du dispositif de mise en contact de gaz-liquide (1), et dans lequel le dispositif de mise en contact de gaz-liquide (1) comprenant un dispositif de distribution de fluide (7, 13) muni d'un premier côté (18) et d'un deuxième côté (19), et une pluralité de percées (8), qui s'étendent depuis le premier côté (18) jusqu'au deuxième côté (19) et au travers desquelles le liquide à mélanger avec du gaz (4) s'écoule, dans lequel le dispositif de distribution de fluide (7, 13) comprenant en outre les éléments suivants : a) un espace intérieur, qui est délimité par le premier côté (18) et par le deuxième côté (19), et qui est configuré sous forme étanche aux fluides vis-à-vis des percées (8) ; b) une pluralité d'ouvertures (20), qui relient l'espace intérieur avec le deuxième côté (19) ; et c) un raccord de fluide (14, 15), au travers duquel le gaz (12) est introduit dans l'espace intérieur ou déchargé de l'espace intérieur,
dans lequel le dispositif de distribution de fluide (7, 13) étant agencé de telle sorte que les percées (8) du dispositif de distribution de fluide (7, 13) se trouvent en connexion d'écoulement avec l'espace (9) entourant les fibres creuses (3), et de telle sorte que les ouvertures (20) du dispositif de distribution de fluide (7, 13) se trouvent en connexion d'écoulement avec une zone intérieure des fibres creuses (3),
**caractérisé en ce que**
les percées (8) du dispositif de distribution de fluide présentent un diamètre qui est supérieur à un diamètre des ouvertures (20).

2. Procédé selon la revendication 1, **caractérisé en ce qu'**une pression de liquide du liquide à mélanger avec du gaz (4) est supérieure à une pression de gaz du gaz (12), dans la mesure où les fibres creuses (3) comprennent une membrane munie d'un matériau hydrophobe poreux.

3. Procédé selon la revendication 1, **caractérisé en ce qu'**une pression de liquide du liquide à mélanger avec du gaz (4) est inférieure à une pression de gaz du gaz (12), dans la mesure où les fibres creuses (3) comprennent une membrane munie d'un matériau hydrophobe sans pores et perméable aux gaz.

4. Procédé selon l'une quelconque des revendications précédentes, **caractérisé en ce que** le liquide à mélanger avec du gaz (4) est un liquide à ozoner et **en ce que** le gaz (12) est un gaz contenant de l'ozone.

5. Procédé selon la revendication 4, **caractérisé en ce que** le gaz contenant de l'ozone qui sort du raccord de fluide du dispositif de mise en contact de gaz-liquide et comprend encore de grandes quantités d'oxygène non utilisé est soumis en tant que gaz contenant de l'oxygène à un conditionnement de gaz d'échappement comprenant les étapes suivantes :
a) la destruction de quantités résiduelles d'ozone dans le gaz contenant de l'oxygène,
b) dans la mesure où la concentration en hydrocarbures dans le gaz contenant de l'oxygène est supérieure à 20 ppm : la réduction de la concentration en hydrocarbures dans le gaz contenant de l'oxygène à moins de 20 ppm,
c) la déshumidification du gaz contenant de l'oxygène,
d) l'augmentation de la concentration en oxygène dans le gaz contenant de l'oxygène déshumidifié à au moins 85 pour cent en volume,
e) le transfert du gaz déshumidifié et enrichi en oxygène dans un générateur d'ozone, où le gaz est utilisé pour la génération d'ozone, de manière à obtenir de nouveau un gaz contenant de l'ozone.

6. Procédé selon l'une quelconque des revendications précédentes, **caractérisé en ce que** le premier côté (18) et le deuxième côté (19) du dispositif de distribution de fluide présentent chacun une surface de base circulaire.

7. Procédé selon l'une quelconque des revendications précédentes, **caractérisé en ce que** le raccord de fluide (14, 15) du dispositif de distribution de fluide est agencé au niveau d'une périphérie latérale du dispositif de distribution de fluide (7, 13).

8. Procédé selon l'une quelconque des revendications précédentes, **caractérisé en ce que** le dispositif de mise en contact de gaz-liquide (1) s'étend le long d'une direction d'extension longitudinale depuis une première extrémité (5) jusqu'à une deuxième extrémité (10) et le dispositif de distribution de fluide (7, 13) est agencé au niveau de la première extrémité (5) ou au niveau de la deuxième extrémité (10) du dispositif de mise en contact de gaz-liquide.

9. Procédé selon la revendication 8, **caractérisé en ce que** le dispositif de mise en contact de gaz-liquide (1) comprend deux dispositifs de distribution de fluide (7, 13), dans lequel l'un dispositif de distribution de fluide (7) étant agencé au niveau de la première extrémité (5) et l'autre dispositif de distribution de fluide (13) étant agencé au niveau de la deuxième extrémité (10).

10. Procédé selon la revendication 9, **caractérisé en ce que** deux brides (6, 17) sont prévues au niveau du dispositif de mise en contact de gaz-liquide (1), qui sont chacune agencées au niveau d'un côté extérieur du dispositif de distribution de liquide (7, 13) dans la direction d'extension longitudinale du dispositif de mise en contact de gaz-liquide (1), et servent au raccord du dispositif de mise en contact de gaz-liquide (1) à un système de conduite.

11. Procédé selon l'une quelconque des revendications précédentes, **caractérisé en ce que** les fibres creuses (3) comprennent une membrane munie d'un matériau hydrophobe poreux.

12. Procédé selon l'une quelconque des revendications 1 à 10, **caractérisé en ce que** les fibres creuses (3) comprennent une membrane munie d'un matériau hydrophobe sans pore et perméable aux gaz.
